# EUROPÄISCHE PATENTANMELDUNG

(11) **EP 1 308 343 A2**
(43) Veröffentlichungstag der Anmeldung: **07.05.2003**
(21) Anmeldenummer: 02022740.1
(22) Anmeldetag: 11.10.2002
(51) Int. Cl.: B60N 2/08, B60N 2/42, B60R 22/26

(54) **Fahrzeugsitz, insbesondere Kraftfahrzeugrücksitz**

(30) Priorität: 02.11.2001 DE 10153872
(71) Anmelder: Keiper GmbH & Co., 67657 Kaiserslautern (DE)
(72) Erfinder: Barzen, Johannes, 54528 Salmtal (DE); Rau, Thomas, 67727 Lohnsfeld (DE); Kramm, Lars, 67705 Trippstadt (DE)
(74) Vertreter: Patentanwälte Hosenthien-Held und Dr. Held

(57) **Zusammenfassung**

Bei einem Fahrzeugsitz (1), insbesondere einem Kraftfahrzeugrücksitz, mit einer Sitzteilstruktur (5), welche einen Längseinsteller (7), eine wenigstens in einer Gebrauchsstellung mit der Fahrzeugstruktur verbundene Verriegelungsschiene (11; 111; 211), eine Adapteranordnung (27; 113, 114; 227) zur Anbringung von Elementen (33; 133; 233) eines Sicherheitsgurtsystems und eine Anbindung (23, 25; 123; 223) der Adapteranordnung (27; 113, 114; 227) innerhalb der Sitzteilstruktur (5) aufweist, wobei die Adapteranordnung (27; 113, 114; 227) mit einem Verriegelungselement (29; 129; 229) versehen ist, welches im Crashfall sich relativ zur Verriegelungsschiene (11; 111; 211) bewegt und mit dieser zusammenwirkt, um die über das Sicherheitsgurtsystem einwirkenden Crashkräfte unter Überbrückung des Längseinstellers (7) in die Fahrzeugstruktur einzuleiten, ist für einen Übergang in eine Packagestellung wenigstens die Adapteranordnung (27; 113, 114; 227) mit ihrer Anbindung (23, 25; 123; 223) schwenkbar und von der Fahrzeugstruktur entfernbar, wobei im Crashfall die Adapteranordnung (27; 113, 114; 227) und/oder deren Anbindung (23, 25; 123; 223) deformierbar und/oder teilweise zerstörbar ist und durch die Deformation bzw. Teilzerstörung das Verriegelungselement (29; 129; 229) sich relativ zur Verriegelungsschiene (11; 111; 211) bewegt.

## Beschreibung

Die Erfindung betrifft einen Fahrzeugsitz, insbesondere einen Kraftfahrzeugrücksitz, mit den Merkmalen des Oberbegriffs des Anspruches 1.

Aus der DE 26 34 218 Al ist ein Fahrzeugsitz dieser Art bekannt, bei dem die Verriegelungsschiene zum Verschließen von Rasten mit einer Hülle überzogen ist, auf welcher das Verriegelungselement im Normalfall während einer Längseinstellung abrollt. Im Crashfall vollführt die Adapteranordnung eine definierte Drehung, so daß das Verriegelungselement die Hülle durchdrückt und von der nächstliegenden Raste aufgenommen wird. Der Herstellungsaufwand einer solchen Verriegelungsschiene und Montageaufwand bei der Justierung der Adapteranordnung lassen noch Wünsche offen.

Der Erfindung liegt die Aufgabe zu Grunde, einen Fahrzeugsitz der eingangs genannten Art zu verbessern. Diese Aufgabe wird erfindungsgemäß durch einen Fahrzeugsitz mit den Merkmalen des Anspruches 1 gelöst. Vorteilhafte Ausgestaltungen sind Gegenstand der Unteransprüche.

Dadurch, daß im Crashfall die Adapteranordnung und/oder deren Anbindung deformierbar und/oder gezielt teilweise zerstörbar ist und daß durch die definierte Deformation bzw. Teilzerstörung das Verriegelungselement sich relativ zur Verriegelungsschiene bewegt, verringert sich der Aufwand bei der Justierung der Adapteranordnung, da höhere Toleranzen beim Abstand möglich sind. Die Verriegelungsschiene muß nicht mehr mit einer Hülle überzogen werden. Die Deformation der Anbindung kann beispielsweise in starren Schwingen oder Halterohren erfolgen, während die Zerstörung sich vorzugsweise auf einen Abscherstift beschränkt. Dadurch, daß für einen Übergang in eine Packagestellung wenigstens die Adapteranordnung mit ihrer Anbindung schwenkbar und von der Fahrzeugstruktur entfernbar ist, kann die Crashverriegelung auch bei wickelbaren Fahrzeugsitzen verwendet werden, d.h. die Crashverriegelung ist vielseitiger einsetzbar. Dies ist insbesondere für mittlere Einzelsitze oder 1/3-2/3-geteilte Fondsitze vorteilhaft, bei denen für den mittleren Sitzplatz der Sicherheitsgurt integriert sein muß. Vorzugsweise wirken die Verriegelungsschiene und die Adapteranordnung mit dem Verriegelungselement unabhängig von der Verbindung des Längseinstellers mit der Fahrzeugstruktur zusammen, um eine vollständige Überbrückung des Längseinstellers zu erreichen.

Für den Übergang in die Packagestellung kann die Verriegelungsschiene von der Fahrzeugstruktur lösbar sein, beispielsweise durch Öffnen einer Schließeinrichtung. Die Verriegelungsschiene kann auch in der Packagestellung mit der Fahrzeugstruktur verbunden sein, indem beispielsweise die Adapteranordnung eine Schließeinrichtung aufweist, welche sich für den Übergang in die Packagestellung vom Verriegelungselement löst, um mit der Anbindung und dem Element des Sicherheitsgurtsystems eine Schwenkbewegung durchzuführen, oder indem die Adapteranordnung oberhalb der Verriegelungsschiene im Abstand zu derselben angeordnet ist und für den Übergang in die Packagestellung mit der Anbindung und dem Element des Sicherheitsgurtsystems eine Schwenkbewegung durchführt.

In einer bevorzugten Ausführung ist eine zusätzliche Sicherung vorgesehen, welche die Verriegelungsschiene im Normalfall mit der Fahrzeugstruktur fest verbunden hält und im Crashfall bei Überschreiten eines Lastniveaus einen Freiheitsgrad der Verriegelungsschiene freigibt, so daß diese beispielsweise gelenkig mit der Fahrzeugstruktur verbunden ist und eine Ausgleichsbewegung durchführen kann.

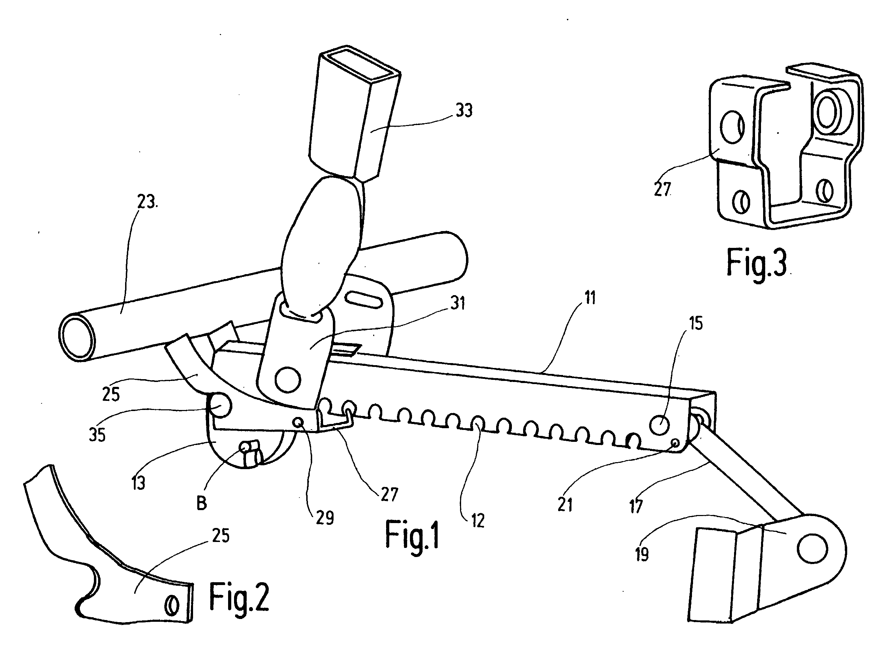

Im folgenden ist die Erfindung anhand dreier in der Zeichnung dargestellten Ausführungsbeispiele näher erläutert. Es zeigen
- Fig. 1: eine perspektivische Teilansicht des ersten Ausführungsbeispiels,
- Fig. 2: eine perspektivische Ansicht einer Deformationsschwinge,
- Fig. 3: eine perspektivische Ansicht einer Verriegelungseinheit,

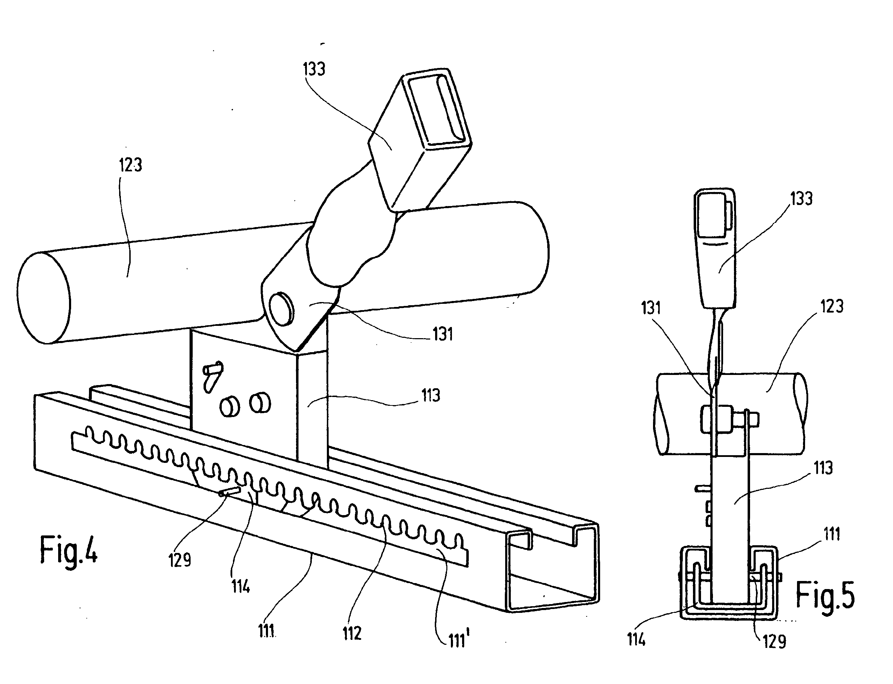

- Fig. 4: eine perspektivische Teilansicht des zweiten Ausführungsbeispiels,
- Fig. 5: eine Teilansicht der Stirnseite des zweiten Ausführungsbeispiels,

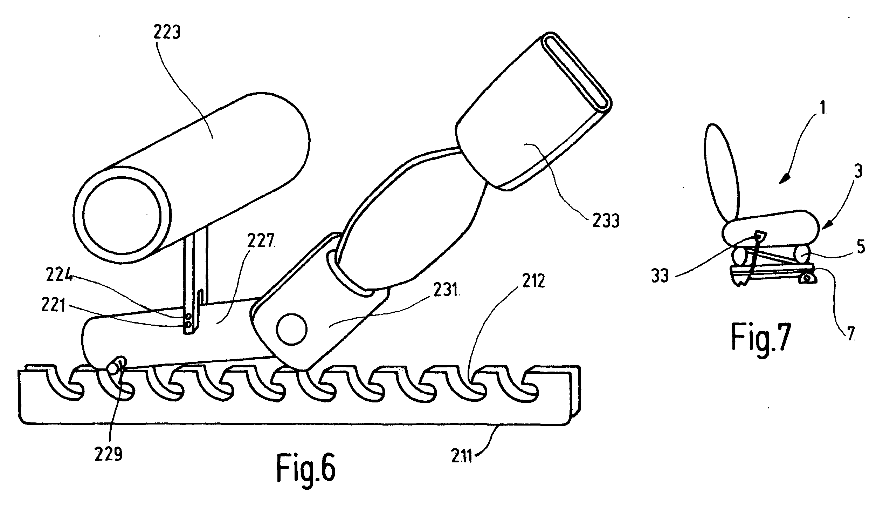

- Fig. 6: eine perspektivische Teilansicht des dritten Ausführungsbeispiels, und
- Fig. 7: eine schematische Seitenansicht des ersten Ausführungsbeispiels.

Im ersten Ausführungsbeispiel ist ein Fahrzeugsitz 1 als mittlerer Sitz in einer Rücksitzanlage eines Kraftfahrzeuges vorgesehen, dessen Orientierung und gewöhnliche Fahrtrichtung die verwendeten Richtungsangaben definiert. Die Struktur des Sitzteiles 3 des Fahrzeugsitzes 1, im folgenden als Sitzteilstruktur 5 bezeichnet, weist im unteren Bereich einen aus zwei Schienenpaaren bestehenden Längseinsteller 7 als Vorrichtung zur Einstellung der Längsposition des Fahrzeugsitzes 1 auf. Für den Übergang von einer nachfolgend genauer beschriebenen Sitzstellung als Gebrauchsstellung in eine Packagestellung kann - nach einem Vorklappen der Lehne - das Sitzteil 3 nach oben in eine aufrechte Position geschwenkt werden.

Auf der Unterseite der Sitzteilstruktur 5 neben den Schienen des Längseinstellers 7 ist links und rechts jeweils eine U-förmig profilierte, nach unten geöffnete Verriegelungsschiene 11 angebracht, welche symmetrisch an ihren beiden nach unten weisenden Flanken in Längsrichtung hintereinander mehrere sichelförmige, nach unten geöffnete Rasten 12 aufweist. Am hinteren Ende der Verriegelungsschiene 11 ist eine Schließeinrichtung 13 angelenkt, welche lösbar mit einem Befestigungsbolzen B der Fahrzeugstruktur verriegelt ist.

Am vorderen Ende der Verriegelungsschiene 11 ist mittels eines vorderen Gelenks 15 eine vordere Schwinge 17 angelenkt, welche mit ihrem anderen Ende an einer Gelenkvorrichtung 19 angelenkt ist. Im Normalfall ist das vordere Gelenk 15 durch einen Abscherstift 21 gesperrt, so daß die Verriegelungsschiene 11 unbeweglich an der Fahrzeugstruktur angebunden oder - nach einem Entriegeln der Schließeinrichtung 13 - zusammen mit dem Sitzteil 3 nach oben in die Packagestellung schwenkbar ist.

An einem Querrohr 23 der Sitzteilstruktur 5 sind seitlich der Verriegelungsschiene 11 zwei Deformationsschwingen 25 angeschweißt, welche schräg nach unten abstehen. Eine zwischen den Deformationsschwingen 25 angeordnete Verriegelungseinheit 27 umschließt die Verriegelungsschiene 11 mit einem nahezu ringförmig geschlossenen Profil und liegt im Normalfall auf der Oberseite der Verriegelungsschiene 11 auf. Ein zwischen beiden Deformationsschwingen 25 horizontal angeordneter Verriegelungsbolzen 29 verbindet die Verriegelungseinheit 27 mit den Deformationsschwingen 25. Im Normalfall ist der Verriegelungsbolzen 29 unterhalb der Verriegelungsschiene 11 im Abstand zu den Rasten 12 angeordnet.

Die Deformationsschwingen 25 und die Verriegelungseinheit 27 bilden eine Adapteranordnung. An der Verriegelungseinheit 27 ist auf beiden Seiten der Verriegelungsschiene 11 jeweils eine Lasche 31 angelenkt. Bei einer der beiden Verriegelungsschienen 11 ist an einer dieser Laschen 31 als Teil eines Sicherheitsgurtsystems ein Gurtschloß 33 angebracht, während bei der anderen Verriegelungsschiene 11 an einer dieser Laschen 31 das untere Ende eines Sicherheitsgurtes befestigt ist. Bei einer Einstellung der Längsposition des Fahrzeugsitzes 1 mittels des Längseinstellers 7 fährt die Verriegelungseinheit 27 samt Gurtschloß 33 an der Verriegelungsschiene 11 entlang. In der hintersten Längsposition können die Deformationsschwingen 25 mittels einer nach hinten geöffneten Aufnahme einen horizontalen, fest mit der Schließeinrichtung 13 verbunden Haltebolzen 35 umgreifen. Der Halttebolzen 35 dient zugleich der Anlenkung der Schließvorrichtung 13 an der Verriegelungsschiene 11.

Im Crashfall verformen die über das Gurtschloß 33 eingeleiteten Crashkräfte vorwiegend das Querrohr 23 und gegebenenfalls die Deformationsschwingen 25. Die Verriegelungseinheit 27 wird angehoben, und der Verriegelungsbolzen 29 gelangt in Eingriff mit zwei einander gegenüberliegenden Rasten 12 der Verriegelungsschiene 11. Dadurch werden die Crashkräfte direkt, d.h. unter Überbrückung - und damit Entlastung - des Längseinstellers 7 und der oberhalb desselben angebrachten Bereiche der Sitzteilstruktur 5, in die Verriegelungsschiene 11 und weiter in die Fahrzeugstruktur eingeleitet.

Wenn die Crashkräfte einen Schwellwert überschreiten, scheren die Abscherstifte 21 ab, d.h. das vordere Gelenk 15 wird jeweils freigegeben. Die Schließvorrichtung 13, die Verriegelungsschiene 11, die vordere Schwinge 17 und die Fahrzeugstruktur zwischen der Gelenkvorrichtung 19 und dem Befestigungsboilzen B auf jeder Seite bilden Viergelenke, welche sich nun entsprechend der Trägheit im vorliegenden Crashfall ausrichten, wobei jeweils die Verriegelungsschiene 11 sich in ihrer Längsrichtung bewegt und die vordere Schwinge 17 eine Schwenkbewegung ausführt. Durch das Prinzip des Viergelenks werden keine zusätzlichen Biegemomente durch die Anbringung an der Fahrzeugstruktur in die Verriegelungsschiene 11 eingeleitet.

Im zweiten Ausführungsbeispiel, welches dem ersten Ausführungsbeispiel weitgehend gleicht, soweit nicht nachfolgend anders beschrieben, sind gleiche und gleichwirkende Bauteile mit um 100 höheren Bezugszeichen versehen.

Eine nach oben geöffnete Verriegelungsschiene 111 ist fest mit der Fahrzeugstruktur verbunden, wobei innerhalb von seitlichen Kulissen 111' Rasten 112 vorgesehen sind. Eine Schließeinrichtung 113 ist in ein Gleitelement 114 mit einem horizontal angeordneten Verriegelungsbolzen 129 eingeklinkt, wobei das Gleitelement 114 innerhalb der Verriegelungsschiene 111 verschiebbar geführt ist. Die Länge des Verriegelungsbolzens 129 ist so bemessen, daß dieser in die Kulissen 111' ragt und unterhalb der Rasten 112 in Abstand zu denselben angeordnet ist. Die Schließeinrichtung 113 ist an einem Querrohr 123 angebracht und trägt als Teil einer Adapteranordnung an ihrem oberen Ende gelenkig eine Lasche 131, an welcher beispielsweise das Gurtschloß 133 befestigt ist.

Im Normalfall gleitet die Schließeinrichtung 113 mit dem Gleitelement 114 bei einer Längseinstellung des Fahrzeugsitzes in der Verriegelungsschiene 111 entlang oder löst sich von dem Verriegelungsbolzen 129 beim Übergang in die Packagestellung. Im Crashfall wird durch die Crashkräfte das Querrohr 123 deformiert und die Schließeinrichtung 113 durch das Gurtschloß 133 nach oben gezogen. Die Schließeinrichtung 113 zieht das Gleitelement 114 nach oben, so daß der Verriegelungsbolzen 129 in Eingriff mit einem Paar gegenüberliegender Rasten 112 gelangt. Die Crashkräfte werden nun direkt - unter Überbrückung des Längseinstellers, d.h. ohne die Sitztstruktur zu belasten - in die Fahrzeugstruktur eingeleitet.

Im dritten Ausführungsbeispiel, welches den beiden anderen Ausführungsbeispielen weitgehend gleicht, soweit nicht nachfolgend anders beschrieben, sind gleiche und gleichwirkende Bauteile mit um 200 bzw. 100 höheren Bezugszeichen versehen.

Eine nach oben geöffnete Verriegelungsschiene 211 ist fest mit der Fahrzeugstruktur verbunden und trägt nach oben, unter einem Winkel von 45° schräg nach hinten geöffnete Rasten 212. An einem Querrohr 223 ist mittels eines Gelenks 224 ein flacher Hebel 227 angebracht, wobei das Gelenk 224 im Normalfall durch einen Abscherstift 221 starr gehalten wird. An seinem hinteren Ende trägt der Hebel 227 einen horizontal angeordneten Verriegelungsbolzen 229. Am vorderen Ende des als Adapteranordnung vorgesehenen Hebels 227 ist eine Lasche 231 angelenkt, an welcher beispielsweise das Gurtschloß 233 befestigt ist.

Im Normalfall gleitet der Hebel 227 bei einer Längseinstellung des Fahrzeugsitzes oberhalb der Verriegelungsschiene 211 entlang oder löst sich von derselben beim Übergang in die Packagestellung. Im Crashfall schert - aufgrund der Crashkräfteder Abscherstift 221 im Gelenk 224 ab. Der Hebel 227 kann nun um das Gelenk 224 schwenken. Das Gurtschloß 233 zieht den Hebel 227 an seinem vorderen Ende nach oben, so daß der Verriegelungsbolzen 229 in ein Paar Rasten 212 gedrückt wird, die quer zur Längsrichtung der Verriegelungsschiene 211 einander gegenüberliegen. Dabei wirkt die schräg nach oben gerichtete Gurtkraft ungefähr senkrecht zur Längsrichtung der Rasten 212, d.h. der Verriegelungsbolzen 229 kann die Rasten 212 nicht wieder verlassen. Die Crashkräfte werden nun direkt - unter Überbrükkung des Längseinstellers - in die Fahrzeugstruktur eingeleitet.

### Bezugszeichenliste

- 1: Fahrzeugsitz
- 3: Sitzteil
- 5: Sitzteilstruktur
- 7: Längseinsteller
- 11, 111, 211: Verriegelungsschiene
- 12, 112, 212: Raste
- 13, 113: Schließeinrichtung
- 15: vorderes Gelenk
- 17: vordere Schwinge
- 19: Gelenkvorrichtung
- 21,221: Abscherstift
- 23, 123, 223: Querrohr
- 25: Deformationsschwinge
- 27: Verriegelungseinheit
- 29, 129, 229: Verriegelungsbolzen
- 31,131,231: Lasche
- 33, 133, 233: Gurtschloß
- 35: Haltebolzen
- 111': Kulisse
- 114: Gleitelement
- 224: Gelenk
- 227: Hebel
- B: Befestigungsbolzen

## Patentansprüche

1. Fahrzeugsitz, insbesondere Kraftfahrzeugrücksitz, mit einer Sitzteilstruktur (5), welche einen Längseinsteller (7), eine wenigstens in einer Gebrauchsstellung mit der Fahrzeugstruktur verbundene Verriegelungsschiene (11; 111; 211), eine Adapteranordnung (27; 113, 114; 227) zur Anbringung von Elementen (33; 133; 233) eines Sicherheitsgurtsystems und eine Anbindung (23, 25; 123; 223) der Adapteranordnung (27; 113, 114; 227) innerhalb der Sitzteilstruktur (5) aufweist, wobei die Adapteranordnung (27; 113, 114; 227) mit einem Verriegelungselement (29; 129; 229) versehen ist, welches im Crashfall sich relativ zur Verriegelungsschiene (11; 111; 211) bewegt und mit dieser zusammenwirkt, um die über das Sicherheitsgurtsystem einwirkenden Crashkräfte unter Überbrückung des Längseinstellers (7) in die Fahrzeugstruktur einzuleiten, **dadurch gekennzeichnet, daß** für einen Übergang in eine Packagestellung wenigstens die Adapteranordnung (27; 113, 114; 227) mit ihrer Anbindung (23, 25; 123; 223) schwenkbar und von der Fahrzeugstruktur entfernbar ist und daß im Crashfall die Adapteranordnung (27; 113, 114; 227) und/oder deren Anbindung (23, 25; 123; 223) deformierbar und/oder teilweise zerstörbar ist und durch die Deformation bzw. Teilzerstörung das Verriegelungselement (29; 129; 229) sich relativ zur Verriegelungsschiene (11; 111; 211) bewegt.

2. Fahrzeugsitz nach Anspruch 1, **dadurch gekennzeichnet, daß** die Verriegelungsschiene (11; 111; 211) und die Adapteranordnung (27; 113, 114; 227) mit dem Verriegelungselement (29; 129; 229) unabhängig von der Verbindung des Längseinstellers (7) mit der Fahrzeugstruktur zusammenwirken.

3. Fahrzeugsitz nach Anspruch 1 oder 2, **dadurch gekennzeichnet, daß** die Verriegelungsschiene (11) für den Übergang in die Packagestellung von der Fahrzeugstruktur lösbar ist.

4. Fahrzeugsitz nach Anspruch 3, **dadurch gekennzeichnet, daß** die Verriegelungsschiene (11) mittels einer lösbaren Schließeinrichtung (13) und einer Gelenkvorrichtung (19) mit der Fahrzeugstruktur verbunden ist.

5. Fahrzeugsitz nach Anspruch 1 oder 2, **dadurch gekennzeichnet, daß** die Verriegelungsschiene (111; 211) auch in der Packagestellung mit der Fahrzeugstruktur verbunden ist.

6. Fahrzeugsitz nach Anspruch 5, **dadurch gekennzeichnet, daß** die Adapteranordnung (113, 114) eine Schließeinrichtung (113) aufweist, welche sich für den Übergang in die Packagestellung vom Verriegelungselement (129) löst, um mit der Anbindung (123) und dem Element (133) des Sicherheitsgurtsystems eine Schwenkbewegung durchzuführen.

7. Fahrzeugsitz nach Anspruch 5, **dadurch gekennzeichnet, daß** die Adapteranordnung (227) oberhalb der Verriegelungsschiene (211) im Abstand zu derselben angeordnet ist und für den Übergang in die Packagestellung mit der Anbindung (223) und dem Element (233) des Sicherheitsgurtsystems eine Schwenkbewegung durchführt.

8. Fahrzeugsitz nach einem der Ansprüche 1 bis 7, **dadurch gekennzeichnet, daß** die Verriegelungsschiene (11) im Crashfall bei Überschreiten eines Lastniveaus gelenkig mit der Fahrzeugstruktur verbunden ist.

9. Fahrzeugsitz nach einem der Ansprüche 1 bis 8, **dadurch gekennzeichnet, daß** die Verriegelungsschiene (11) oder die Adapteranordnung (227) einen Abscherstift (21) aufweist, welcher im Normalfall ein Gelenk (15, 224) sperrt und im Crashfall bricht, um eine Schwenkbewegung der Verriegelungsschiene (11) bzw. der Adapteranordnung (227) aufgrund der Crashkräfte zu ermöglichen.
